# EUROPÄISCHE PATENTSCHRIFT

(11) **EP 1 022 188 B1**
(45) Veröffentlichungstag und Bekanntmachung des Hinweises auf die Patenterteilung: **08.09.2004**
(21) Anmeldenummer: 99123739.7
(22) Anmeldetag: 30.11.1999
(51) Int. Cl.: B60Q 1/26, F21S 8/10

(54) **Leuchte für Fahrzeuge**
Vehicle lights
Feux de véhicule

(30) Priorität: 23.01.1999 DE 19902629
(43) Veröffentlichungstag der Anmeldung: 26.07.2000
(73) Patentinhaber: VALEO Beleuchtung Deutschland GmbH, 74321 Bietigheim-Bissingen (DE)
(72) Erfinder: Feger, Rolf, 74321 Bietigheim-Bissingen (DE); Lendle, Reiner, 74855 Haamersheim (DE)
(74) Vertreter: Dreiss, Fuhlendorf, Steimle & Becker

(56) Entgegenhaltungen:
- US-A- 4 750 096
- US-A- 5 582 480
- US-A- 5 618 102
- PATENT ABSTRACTS OF JAPAN vol. 1997, no. 01, 31. Januar 1997 (1997-01-31) & JP 08 244524 A (KOITO MFG CO LTD), 24. September 1996 (1996-09-24)

## Beschreibung

Die Erfindung betrifft eine Leuchte mit einem Reflektor, wenigstens einer Neon-Lampe und einer Abdeckscheibe, wobei der Reflektor mit einer Abschirmung für das direkte, zur Abdeckscheibe gerichtete Licht der Neon-Lampe versehen ist, und wobei die Neon-Lampe von der Rückseite des Reflektors oder von vorne in diesen einsetzbar ist.

Eine solche Leuchte ist sowohl aus der US 5,582,480 als auch aus der US 5,618,102 bekannt.

Die Erfindung betrifft im Allgemeinen, eine Leuchte für Fahrzeuge mit einem Reflektor, wenigstens einer Neon-Lampe und einer Abdeckscheibe.

Aus der DE 94 13 286 U1 ist eine Zusatzbremsleuchte für einen Personenkraftwagen bekannt geworden, welche an der Hutablage angeordnet und in Richtung der Heckscheibe ausgerichtet ist. Im Leuchtengehäuse kann eine gekrümmte Leuchtstoffröhre angeordnet sein. Zwar kann mit Leuchtstoffröhren eine hohe Leuchtausbeute erzielt werden, jedoch ist die Neon-Lampe als heller Streifen zu sehen und die Ausleuchtung nimmt nach außen sehr stark ab. Außerdem müssen die Anschlusselemente mit zusätzlichen Teilen abgedeckt werden. Ein weiterer Nachteil wird darin gesehen, dass zum Einsetzen bzw. Austauschen der Leuchtstoffröhre entweder die Abdeckscheibe entfernt oder die gesamte Leuchte abmontiert werden muss.

Aus der WO-A-98 12 471 ist eine Heckleuchte bekannt geworden, in welche mehrere Leuchtstoffröhren vor den Reflektor eingesetzt sind.

Ausgehend von der US 5,582,980 oder der US 5,618,102 liegt der Erfindung die Aufgabe zugrunde, eine Leuchte bereitzustellen, die sich durch eine vereinfachte Herstellung und eine vereinfachte Handhabung im Herstellungsprozess auszeichnet und bei der die Abschirmung exakt in beziehungsweise am Reflektor positioniert wird.

Diese Aufgabe wird bei einer Leuchte der eingangs genannten Art dadurch gelöst, dass die Abschirmung einstückig mit dem Reflektor ausgebildet ist.

Die Abschirmung und der Reflektor können auf diese Weise gleichzeitig bedampft werden und müssen anschließend nicht mehr gehandhabt werden. Die einstückige Ausgestaltung hat außerdem den Vorteil, dass die Abschirmung exakt im beziehungsweise am Reflektor positioniert ist.

Mit dieser Abschirmung wird verhindert, dass die Neon-Lampe durch die Abdeckscheibe als heller Streifen zu sehen ist. Außerdem kann mit dieser Abschirmung verhindert werden, dass die Neon-Lampe aufgrund ihrer hohen Lichtausbeute und somit Lichtdichte andere Verkehrsteilnehmer blendet. Die Ausleuchtung und die gesamte Lichttechnik wird auf diese Weise verbessert. Als Leuchten sind Heckleuchten, Bremsleuchten, Blinkleuchten, Rückfahrleuchten etc. denkbar.

Eine bevorzugte Weiterbildung sieht vor, dass die Neon-Lampe von der Rückseite des Reflektors in diesen einsetzbar ist. Der Reflektor weist eine der Form der Neon-Lampe angepasste Öffnung auf, durch welche die Neon-Lampe ganz oder teilweise von hinten, d.h. von der Rückseite in den Reflektor eingeschoben wird. Dies hat den wesentlichen Vorteil, dass zum Einsetzen oder Auswechseln der Neon-Lampe die Abdeckscheibe nicht vom Reflektor gelöst werden muss und sogar die Möglichkeit besteht, dass die Abdeckscheibe unlösbar mit dem Reflektor verbunden werden kann. Ein weiterer Vorteil wird darin gesehen, dass bei der erfindungsgemäßen Leuchte die Neon-Lampe mühelos von der Innenseite des Fahrzeugs am Reflektor befestigt werden kann und dies unter Umständen sogar ohne Werkzeug erfolgen kann. Bei einer Variante ist die Neon-Lampe von vorne einsetzbar.

Eine Weiterbildung sieht vor, dass die Abschirmung auf der der Neon-Lampe zugewandten Seite lichtreflektierend, insbesondere in Richtung des Reflektors ablenkend ausgebildet ist. Das von der Neon-Lampe direkt auf die Abschirmung abgestrahlte Licht wird von der Abschirmung, insbesondere von deren Reflektor auf den Hauptreflektor der Leuchte abgelenkt, so dass dieses Licht genutzt werden kann und nicht hinter der Abdeckung vernichtet wird.

Erfindungsgemäß ist die Abschirmung über einen oder mehrere Stege mit dem Reflektor verbunden. Die Stege haben den Vorteil, dass aufgrund der großen Länge der Neon-Lampe nahezu keine Abschattungen entstehen.

Dadurch, dass bei einer Ausführungsform die Abschirmung teilweise lichtdurchlässig ist, kann verhindert werden, dass im Bereich der Abdeckung ein schwarzer Streifen entsteht. Die Teillichtdurchlässigkeit der Abschirmung kann dabei so gewählt werden, dass die Intensität des die Abschirmung durchscheinenden Lichts so groß ist, wie die Intensität des am Reflektor reflektierten Lichts.

Eine Weiterbildung sieht vor, dass die Abschirmung auf der der Neonlampe abgewandten Seite eine Oberflächenstruktur aufweist und/oder eingefärbt ist. Auf diese Weise können optische oder gestalterische Effekte erzielt werden.

Bei einem weiteren Ausführungsbeispiel ist vorgesehen, dass der Reflektor eine gewellte oder gestufte Reflektoroberfläche aufweist. Anstelle der paraboloidartigen Ausgestaltung kann der Reflektor gewellt sein, wobei das Licht, abhängig von der Ausführung der Wellen, entsprechend in Richtung der Abdeckscheibe reflektiert wird. Dies kann auch durch eine gestufte Reflektoroberfläche erzielt werden.

Mit Vorzug sind an der Rückseite des Reflektors Halteelemente und/oder Steckkontakte für die Neon-Lampe vorgesehen. Dabei sind die Steckkontakte für die Neon-Lampe abgedeckt, so dass keine zusätzlichen Abdeckungen erforderlich sind. Über die Halteelemente kann die Röhre der Neon-Lampe exakt positioniert und fixiert werden, indem die Röhre z.B. an den Halteelementen direkt anliegt.

Weitere Vorteile, Einzelheiten und Merkmale der Erfindung ergeben sich aus den Unteransprüchen sowie aus der nachfolgenden Beschreibung, in der unter Bezugnahme auf die Zeichnung besonders bevorzugte Ausführungsbeispiele im Einzelnen dargestellt sind. Dabei können die in der Zeichnung dargestellten und in der Beschreibung und in den Ansprüchen erwähnte Merkmale jeweils einzeln für sich oder in beliebiger Kombination erfindungswesentlich sein. In der Zeichnung zeigen:
- Figur 1: eine Draufsicht auf einen Reflektor mit schematisch angedeuteter Neon-Lampe;
- Figur 2: einen Schnitt II-II gemäß Figur 1 durch den Reflektor;
- Figur 3: einen Schnitt III-III durch den Reflektor gemäß Figur 1, die Steckkontakte zeigend;
- Figur 4: einen Querschnitt durch eine erste Ausführungsform einer Heckleuchte;
- Figur 5: einen Querschnitt durch eine zweite Ausführungsform einer Heckleuchte; und
- Figur 6: einen Querschnitt durch eine dritte Ausführungsform einer Heckleuchte.

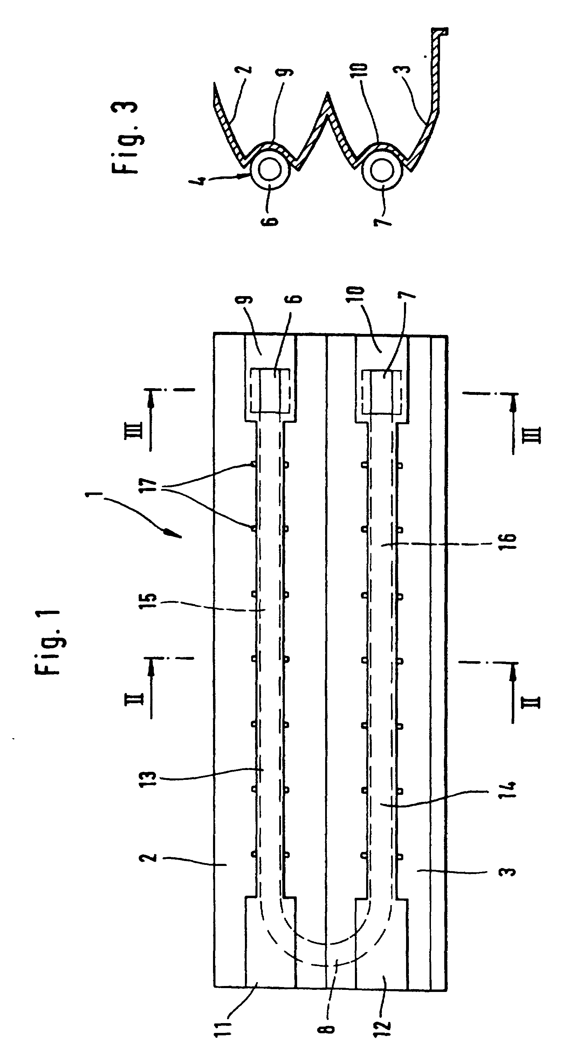

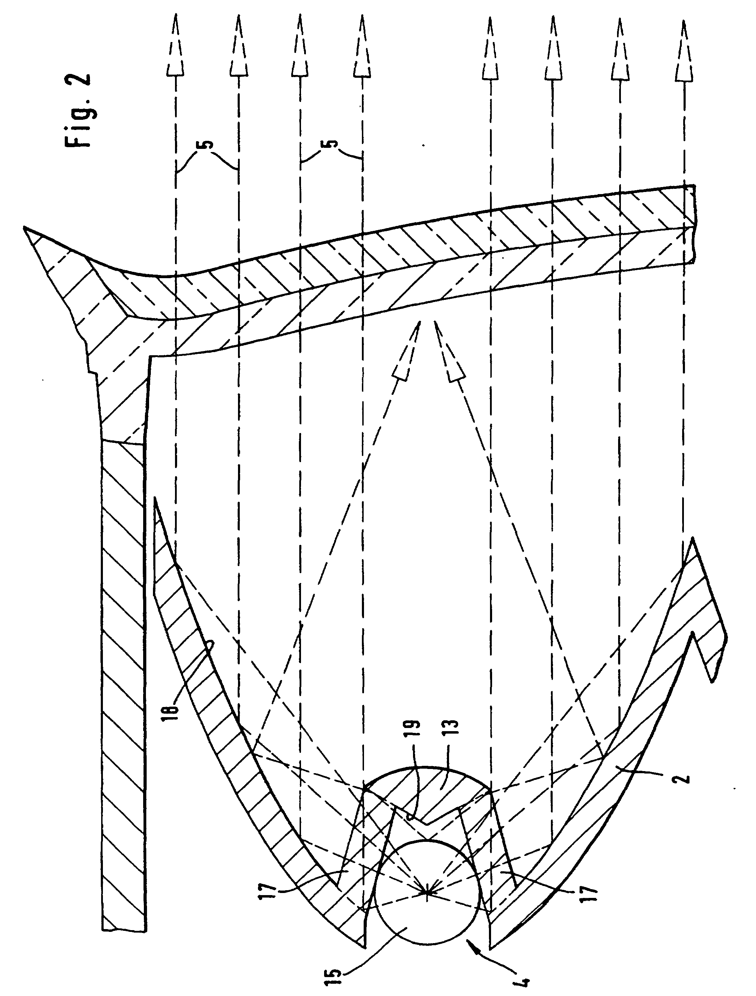

Die Figur 1 zeigt einen insgesamt mit 1 bezeichneten Reflektor, der beim dargestellten Ausführungsbeispiel zwei Reflektorschalen 2 und 3 aufweist. Die Reflektorschale 2 ist in vergrößerter Wiedergabe in Figur 2 dargestellt. Beide Reflektorschalen 2 und 3 sind, wie aus Figur 2 ersichtlich, parabelförmig gekrümmt, so dass das Licht einer Neon-Lampe 4 (Figur 2) in im Wesentlichen parallele Strahlen 5 umgelenkt wird. Die Neon-Lampe 4 weist zwei Anschlusselemente 6 und 7 auf und ist mit einem bogenförmigen Abschnitt 8 versehen. Der Reflektor 1 weist im Bereich der Anschlusselemente 6 und 7 sowie im Bereich des bogenförmigen Abschnitts 8 Abdeckungen 9 bis 12 auf, mit denen die Anschlusselemente 6 und 7 sowie der bogenförmige Abschnitt 8 abgedeckt werden.

Zwischen den Abdeckungen 9 und 11 sowie 10 und 12 erstreckt sich jeweils eine Abschirmung 13 und 14. Mit diesen Abschirmungen 13 und 14 werden die linearen Abschnitte 15 und 16 der Neon-Lampe 4 in Richtung einer nicht dargestellten Abdeckscheibe abgedeckt. Auf diese Weise wird verhindert, dass das Licht der Neon-Lampe 4 direkt in Richtung der Abdeckscheibe abgestrahlt wird. Außerdem ist die Neon-Lampe 4 von außen, d.h. durch die Abdeckscheibe nicht sichtbar. Die Abschirmungen 13 und 14 sind über schmale Stege 17 mit den Reflektorschalen 2 verbunden. Die Breite der Stege 17 ist so gewählt, dass lediglich ein vernachlässigbarer Bereich der linearen Abschnitte 15 und 16 der Neonlampe 4 überdeckt ist. Ferner werden die Abschirmungen 13 und 14 über die Stege 17 fest mit den Reflektorschalen 2 und 3 verbunden, so dass sie mit diesen gehandhabt werden können.

Zwischen der Abschirmung 13 und der Reflektorschale 2 sowie zwischen zwei Stegen 17 befinden sich die Austrittsöffnungen, durch welche das Licht der Neon-Lampe 4 austreten und auf die Reflektoroberfläche 18 auftreffen kann. Dort wird das Licht in im Wesentlichen parallele Strahlen 5 abgelenkt. Das auf die der Neon-Lampe 4 zugewandte Seite der Abschirmung 13 auftreffende Licht wird von einem zweiten Reflektor 19 abgelenkt, so dass dieses Licht ebenfalls durch die Öffnungen austreten und genutzt werden kann. Dieser Reflektor 19 weist hierfür eine lichtlenkende Geometrie auf.

Aus Figur 2 ist außerdem erkennbar, dass die Stege 17 an der Oberfläche der Neon-Lampe 4 anliegen und dadurch die Neon-Lampe 4 in einer definierten Position festhalten.

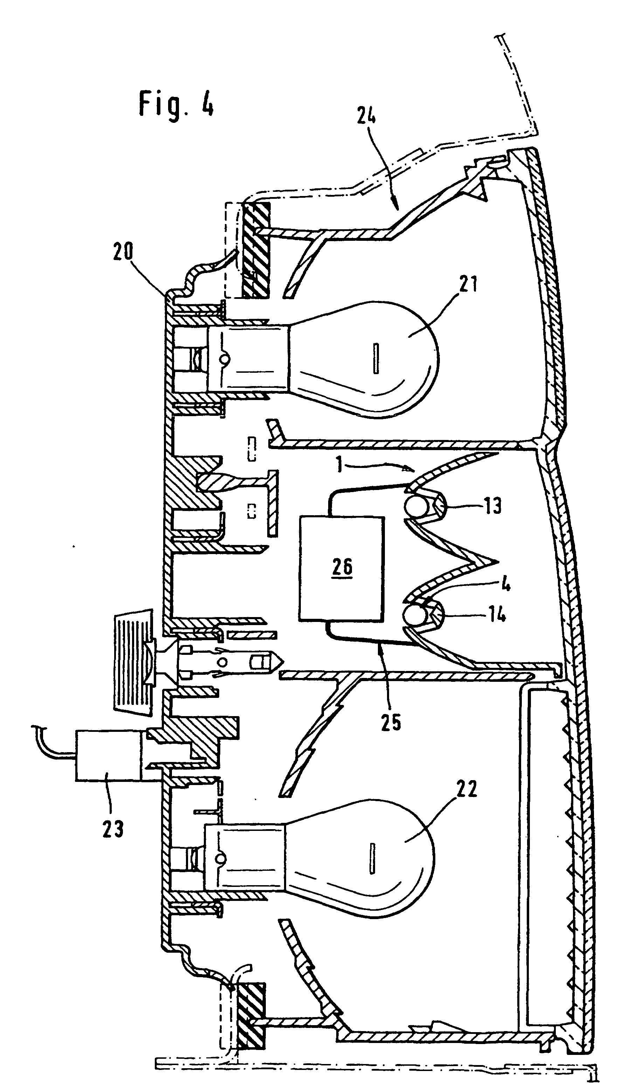

In der Figur 3 sind die beiden Reflektorschalen 2 und 3 im Schnitt dargestellt und es sind die beiden Abdeckungen 9 und 10 erkennbar, die die beiden Anschlusselemente 6 und 7 der Neon-Lampe 4 abdecken.

Die Figur 4 zeigt ein erstes Ausführungsbeispiel der Erfindung im Schnitt, welches gemäß den Figur 2 und 3 ausgeführt ist. Es ist deutlich erkennbar, dass nach Abnahme einer Abdeckschale 20, an welcher Glühbirnen 21 und 22 sowie Elemente 23 zur Stromversorgung vorgesehen sind, von der Heckleuchte 24, die Rückseite des Reflektors 1 zugänglich ist. Diese Rückseite ist mittels einer Kappe 25, in welcher ein Vorschaltgerät 26 integriert ist, übergriffen. Nach Abnahme der Kappe 25 ist die Neon-Lampe 4 frei zugänglich und kann von der Rückseite in den Reflektor 1 eingesetzt bzw. aus diesem entnommen werden. Ein Austausch der Neon-Lampe 1 ist somit einfach und problemlos möglich.

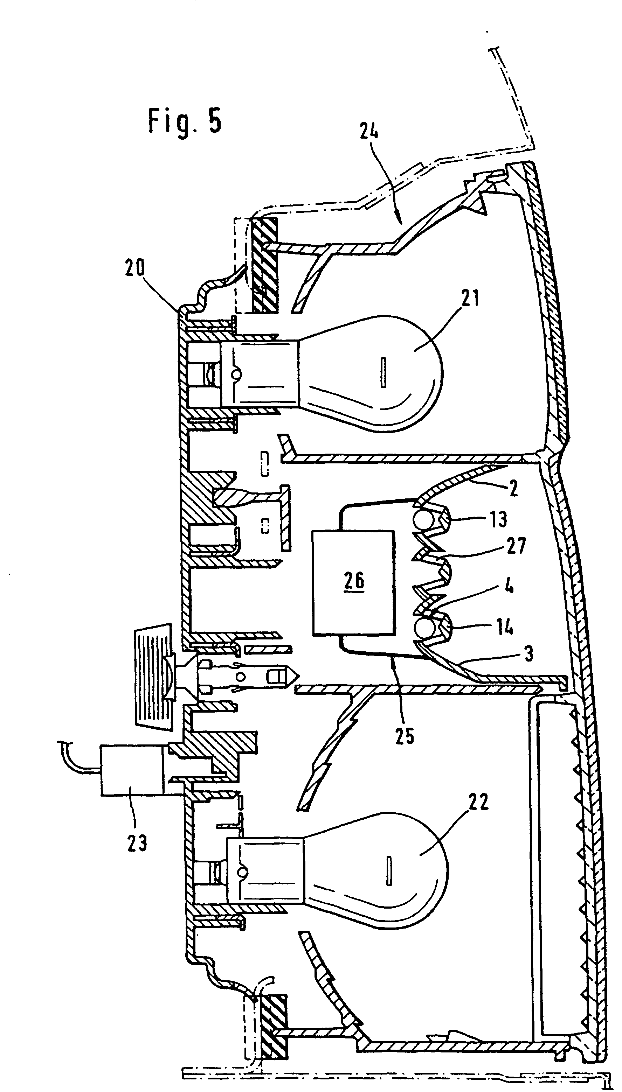

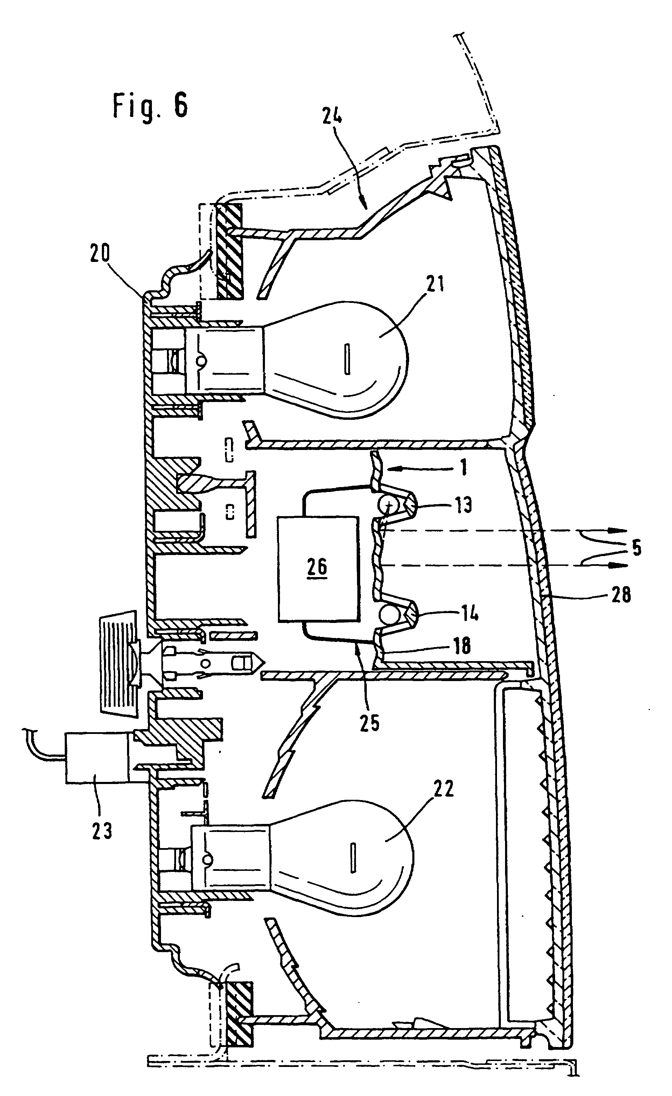

Die Figur 5 zeigt ein zweites Ausführungsbeispiel, bei dem zwischen den beiden Reflektorschalen 2 und 3 eine weitere Aufnahme 27 für einen linearen Abschnitt einer Neon-Lampe 4 vorgesehen ist. Schließlich ist in Figur 6 ein drittes Ausführungsbeispiel dargestellt, bei welchem der Reflektor 1 eine gewellte Reflektoroberfläche 18 aufweist, wobei die Wellenlinien derart ausgebildet sind, dass sie das auf sie auftreffende Licht in im Wesentlichen parallele Strahlen 5 in Richtung der Abdeckscheibe 28 ablenken. Auf diese Weise können besondere Designwünsche berücksichtigt werden.

Auf jeden Fall ist bei allen Ausführungsformen die Neon-Lampe 4 von einer Abschirmung 13 und 14 überdeckt, so dass die Strahlen der Neon-Lampe 4 nicht direkt auf die Abdeckscheibe 28 treffen.

## Patentansprüche

1. Leuchte mit einem Reflektor (1), wenigstens einer Neon-Lampe (4) und einer Abdeckscheibe (28), wobei der Reflektor (1) mit einer Abschirmung (13, 14) für das direkte, zur Abdeckscheibe (28) gerichtete Licht der Neon-Lampe (4) versehen ist, und wobei die Neon-Lampe (4) von der Rückseite des Reflektors (1) oder von vorne in diesen einsetzbar ist, **dadurch gekennzeichnet, dass** die Abschirmung (13, 14) einstückig mit dem Reflektor ausgebildet ist.

2. Leuchte nach Anspruch 1, **dadurch gekennzeichnet, dass** die Abschirmung (13, 14) auf der der Neon-Lampe (4) zugewandten Seite lichtreflektierend, insbesondere in Richtung des Reflektors (1) ablenkend ausgebildet ist.

3. Leuchte nach Anspruch 1 oder 2, **dadurch gekennzeichnet, dass** die Abschirmung (13, 14) über einen oder mehrere Stege (17) mit dem Reflektor (1) verbunden ist.

4. Leuchte nach einem der Ansprüche 1 bis 3, **dadurch gekennzeichnet, dass** die Abschirmung (13, 14) teillichtdurchlässig ist.

5. Leuchte nach einem der Ansprüche 1 bis 4, **dadurch gekennzeichnet, dass** die Abschirmung (13, 14) auf der der Neon-Lampe (4) abgewandten Seite eine Oberflächenstruktur aufweist und/oder eingefärbt ist.

6. Leuchte nach einem der vorhergehenden Ansprüche, **dadurch gekennzeichnet, dass** der Reflektor (1) eine gewellte oder gestufte Reflektoroberfläche (18) aufweist.

7. Leuchte nach einem der vorhergehenden Ansprüche, **dadurch gekennzeichnet, dass** an der Rückseite des Reflektors (1) Halteelemente und/oder Steckkontakte für die Neon-Lampe (4) vorgesehen sind.

8. Leuchte nach Anspruch 7, **dadurch gekennzeichnet, dass** die Steckkontakte für die Neon-Lampe (4) mittels einer Abdeckung (9 bis 12) abgedeckt sind

9. Leuchte nach Anspruch 8, **dadurch gekennzeichnet, dass** die Abdeckung (9 bis 12) einstückig am Reflektor (1) vorgesehen ist.

10. Leuchte nach Anspruch 8 oder 9, **dadurch gekennzeichnet, dass** die Abdeckung (9 bis 12) als Ausprägung am Reflektor (1) ausgebildet ist.

11. Leuchte nach einem der Ansprüche 7 bis 10, **dadurch gekennzeichnet, dass** die Halteelemente an der Röhre der Neon-Lampe (4) anliegen and diese fixieren.

12. Leuchte nach einem der Ansprüche 1 bis 11, **dadurch gekennzeichnet, dass** die Abschirmung (13, 14) über den linearen Abschnitten (15, 16) der Neon-Lampe (4) vorgesehen sind.

## Claims

1. A light comprising a reflector (1), at least one neon lamp (4) and a cover plate (28), wherein said reflector (1) is provided with a shield (13, 14) for shielding direct light travelling towards said cover plate (28) and wherein the neon lamp (4)is insertable into the reflector (1) from the back or the front, **characterized in that** that the shield (13, 14) is integral with the reflector (1).

2. Light according to claim 1, **characterized in that** the shield (13, 14) is manufactured in a light reflecting way on the side facing the neon lamp (84), in particular deflecting in direction towards the reflector (1).

3. Light according to claim 1 or 2, **characterized in that** the shield (13, 14) is connected to the reflector (1) via one or more braces (17).

4. Light of one of the claim 1 to 3, **characterized in that** said shield (13, 14) is partially permeable to light.

5. Light of one of the claim 1 to 4, **characterized in that** said shield (13, 14) has a surface structure and/or is tinted on the side facing away from said neon lamp (4).

6. Light of one of the preceding claims, **characterized in that** said reflector (1) has a corrugated or stepped reflector surface (18).

7. Light of one of the preceding claims, **characterized in that** said reflector (1) comprises holding elements and/or plug contacts for said neon lamp (4) on its back.

8. Light of claim 7, **characterized in that** plug contacts for said neon lamp (4) are covered by a covering means (9 to 12).

9. Light of claim 8, **characterized in that** said covering means (9 to 12) are integral with said reflector (1).

10. Light of claim 8 or 9, **characterized in that** said covering means (9 to 12) consist of an embossment on said reflector (1).

11. Light of one of the claim 7 to 10, **characterized in that** said holding elements seat on and fix a tube of said neon lamp (4).

12. Light of one of the claim 1 to 11, **characterized in that** said shield (13, 14) is provided over the linear parts (15, 16) of the neon lamp (4).

## Revendications

1. Luminaire comprenant un réflecteur (1), au moins une lampe néon (4) et une vitre de recouvrement (28), le réflecteur (1) étant pourvu d'un écran (13, 14) pour la lumière directe, orientée vers la vitre de recouvrement (28), de la lampe néon (4), et la lampe néon (4) pouvant être insérée par l'arrière du réflecteur (1) ou par l'avant dans celui-ci, **caractérisé en ce que** l'écran (13, 14) est conçu d'une seule pièce avec le réflecteur.

2. Luminaire selon la revendication 1, **caractérisé en ce que** l'écran (13, 14) est réalisé sur le côté dirigé vers la lampe néon (4) en réfléchissant la lumière, en particulier en la déviant en direction du réflecteur (1).

3. Luminaire selon la revendication 1 ou 2, **caractérisé en ce que** l'écran (13, 14) est relié par une ou plusieurs nervures (17) au réflecteur (1).

4. Luminaire selon l'une quelconque des revendications 1 à 3, **caractérisé en ce que** l'écran (13, 14) est semi-transparent.

5. Luminaire selon l'une quelconque des revendications 1 à 4, **caractérisé en ce que** l'écran (13, 14) présente une structure superficielle et/ou est teinté sur le côté opposé à la lampe néon (4).

6. Luminaire selon l'une quelconque des revendications précédentes, **caractérisé en ce que** le réflecteur (1) présente une surface de réflecteur (18) ondulée ou étagée.

7. Luminaire selon l'une quelconque des revendications précédentes, **caractérisé en ce que** des éléments de maintien et/ou des contacts à fiches pour la lampe néon (4) sont prévus sur l'arrière du réflecteur (1).

8. Luminaire selon la revendication 7, **caractérisé en ce que** les contacts à fiches pour la lampe néon (4) sont recouverts au moyen d'un recouvrement (9 à 12).

9. Luminaire selon la revendication 8, **caractérisé en ce que** le recouvrement (9 à 12) est prévu d'une seule pièce sur le réflecteur (1).

10. Luminaire selon la revendication 8 ou 9, **caractérisé en ce que** le recouvrement (9 à 12) est conçu comme une pièce estampée sur le réflecteur (1).

11. Luminaire selon l'une quelconque des revendications 7 à 10, **caractérisé en ce que** les éléments de maintien s'appuient sur le tube de la lampe néon (4) et fixent celui-ci.

12. Luminaire selon l'une quelconque des revendications 1 à 11, **caractérisé en ce que** l'écran (13, 14) est prévu sur les parties (15, 16) linéaires de la lampe néon (4).
